Europäisches Patentamt

European Patent Office

Office européen des brevets

(11) Veröffentlichungsnummer: **0 239 771 B1**

(12) **EUROPÄISCHE PATENTSCHRIFT**

(45) Veröffentlichungstag der Patentschrift: **29.07.92**

(21) Anmeldenummer: **87102362.8**

(22) Anmeldetag: **19.02.87**

Die Akte enthält technische Angaben, die nach
dem Eingang der Anmeldung eingereicht wurden
und die nicht in dieser Patentschrift enthalten sind.

(51) Int. Cl.⁵: **C25B 9/00**, C25B 11/00,
H01M 8/12

(54) **Herstellung von langzeitbeständigen Sauerstoffelektroden für Elektrolysezellen mit Festelektrolyt.**

(30) Priorität: **04.04.86 DE 3611291**

(43) Veröffentlichungstag der Anmeldung:
**07.10.87 Patentblatt 87/41**

(45) Bekanntmachung des Hinweises auf die
Patenterteilung:
**29.07.92 Patentblatt 92/31**

(84) Benannte Vertragsstaaten:
**BE CH DE FR GB LI LU NL**

(56) Entgegenhaltungen:
DE-A- 1 471 794      DE-A- 2 105 643
DE-A- 2 852 647      DE-B- 2 747 467
FR-A- 2 296 703      FR-A- 2 347 783
FR-A- 2 353 143      GB-A- 2 002 739
US-A- 3 377 203

(73) Patentinhaber: **DORNIER GMBH**
**Postfach 1420**
**W-7990 Friedrichshafen 1(DE)**

(72) Erfinder: **Schäfer, Wolfgang, Dr.Dipl.-Phys.**
**Rudpertstrasse 16**
**W-7990 Friedrichshafen 24(DE)**
Erfinder: **Schmidberger, Rainer, Dr.Dipl.-Phys.**
**Reussenbachstrasse 33**
**W-7778 Markdorf(DE)**

(74) Vertreter: **Landsmann, Ralf, Dipl.-Ing.**
**c/o DORNIER GMBH Postfach 1420**
**W-7990 Friedrichshafen 1(DE)**

## Beschreibung

Die Erfindung betrifft eine langzeitbeständige Sauerstoffelektrode für eine Elektrolysezelle oder für eine Hochtemperatur-Brennstoffzelle nach dem Oberbegriff des Anspruchs.

Bisher bekannte Sauerstoffelektroden genügen kurzfristig den gestellten Aufgaben. Bei längerer Benutzungsdauer löst jedoch der austretende Sauerstoff an den Grenzflächen Elektrodenteilchen ab, was zu einer Verringerung der Kontaktfläche und daraus resultierender Kontaktwiderstands- und elektrischer Verlustspannungserhöhung führt. Somit ergibt sich der Bedarf eines neuen Konzepts der Grenzflächen zwischen Elektroden und Elektrolyt. Eine Verringerung der Verlustspannung und Steigerung der elektrochemischen Wirksamkeit von Elektroden mittels Vergrösserung der Dreiphasengrenzen zwischen Elektrode, Elektrolyt und Gas ist bereits bekannt. Dieses geschieht beispielsweise durch Oberflächenaufrauhung oder Herstellung eines Verbundwerkstoffes aus einem Ionenleiter und einem Elektronenleiter. Dieser Verbundwerkstoff wird auch als verbindende Zwischenschicht zwischen zwei Materialien zur Anpassung der unterschiedlichen thermischen Ausdehnung benutzt, wobei der Verbundwerkstoff eine Mischung der beiden zu verbindenden Materialien darstellt. Die Herstellung einer Pulvermischung durch Mischen der Einzelpulver in einem Schlickermedium und Auftragen der Schlicker durch Tauchen oder Spritzen ist ebenfalls bekannt. Die **DE-A-28 52 647** gibt an, dass auf eine ungebrannte Schicht eine weitere ungebrannte Schicht aufgetragen wird und beide Schichten gemeinsam eingebrannt werden.

Die **GB-A 2 002 739** offenbart ein elektronenleitendes Verbindungsmaterial zur elektrisch leitfähigen und gasdichten Verbindung von Feststoff-Luft- oder Sauerstoffelektroden einer Hochtemperaturbrennstoffzelle oder Hochtemperaturelektrolysezelle mit der Feststoff-Brenngas- oder Wasserdampfelektrode einer benachbarten Zelle.

Die **US-A-3,377,203** offenbart eine Elektrode für eine Hochtemperatur-Brennstoffzelle, bestehend aus einer ersten Schicht, einem Festelektrolyten aus einem keramischen Ionenleiter wie stabilisiertem $ZrO_2$, einer zweiten Schicht, einem Verbundwerkstoff aus keramischem Ionenleiter und einem keramischen Elektrodenwerkstoff und einer dritten Schicht, dem eigentlichen, keramischen Elektrodenwerkstoff. Diese Elektrode bildet den Oberbegriff des Anspruchs. Die Zweite Schicht ist dicht gebrannt und nicht porös.

Der Erfindung liegt die Aufgabe zugrunde, eine langzeitbeständige, elektrochemisch hochwirksame Sauerstoffelektrode zu entwickeln, deren Betriebszeit die bekannter Sauerstoffelektroden bei weitem übersteigt und bei der eine Blockade des Ladungstransfers verringert wird.

Diese Aufgabe wird erfindungsgemäß durch den Anspruch gelöst.

Die Erfindung wird nachfolgend anhand von Figuren näher beschrieben.

Es zeigen:

Figur 1    den Aufbau einer Elektrolysezelle mit Festelektrolyt.

Figur 2    den schematischen Aufbau einer Elektrode entsprechend der Erfindung in vergrößerter Darstellung.

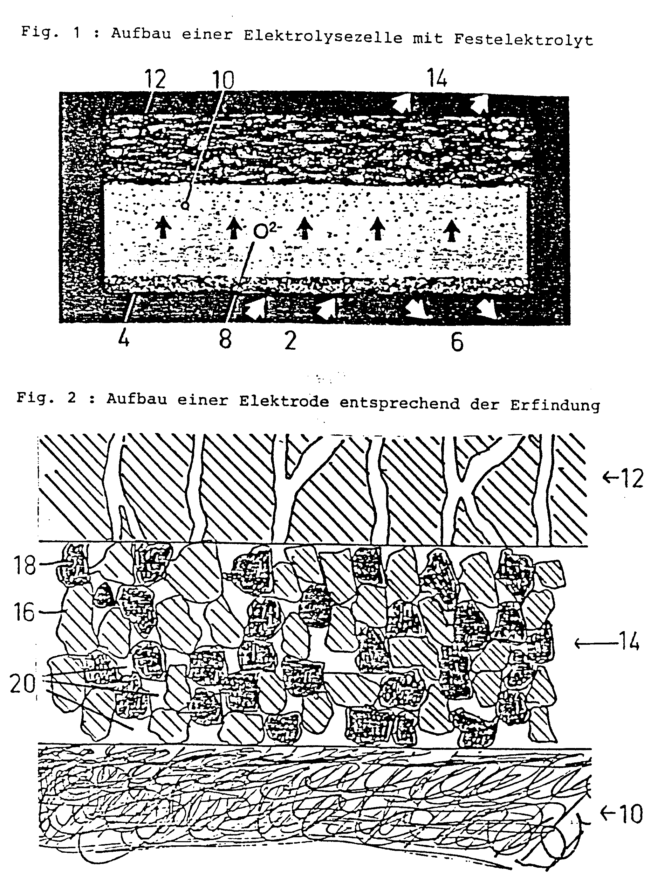

In Figur 1 ist der Aufbau einer Elektrolysezelle nach dem Stand der Technik beschrieben. Wasser trifft in Form von Wasserdampf 2 auf die negativ geladene Kathode 4 auf. Unter Zuführung von elektrischem Strom wird der Wasserdampf 2 dort in Wasserstoff 6 und Sauerstoff 8 aufgetrennt. Während der Wasserstoff 6 als $H_2$ im Wasserdampfstrom 2 abgeführt wird, tritt der Sauerstoff in ionisierter Form als $0^{2-}$ 8 durch den Festelektrolyten 10. Die Pfeile zeigen die Bewegungsrichtung der Sauerstoffionen 8. Der Festelektrolyt 10 besteht dabei aus $Y_2O_3$-stabilisiertem $ZrO_2$. An der positiv geladenen Anode 12 werden die Sauerstoffionen entladen und treten gasförmig als $O_2$ 14 aus.

In Figur 2 ist aus einer Elektrolysezelle der Übergang vom Festelektrolyten 10 zur positiv geladenen Anode 12, der Sauerstoffelektrode, schematisch dargestellt. Hier ist das Besondere der Erfindung darin zu sehen, dass beide Bestandteile des eingefügten Verbundwerkstoffs 14 zwischen Elektrolyt 10 und Elektrodenwerkstoff 12 keramische Bestandteile sind. Diese Bestandteile 16 und 18 setzen sich sowohl aus dem Elektrodenmaterial 12 als auch aus dem Elektrolytmaterial 10 zusammen.

Innerhalb des Verbundwerkstoffs 14, der eine grosse Anzahl von Poren 20 beinhaltet, wird eine Vielzahl von mikroskopischen Kontaktflächen zwischen Ionenleiter und Elektronenleiter realisiert, wobei die Summe der Flächen größer als die makroskopische, geometrische Elektrolytoberfläche ist. Somit verteilt sich die Sauerstoffentwicklung auf eine große Dreiphasengrenze, große Stromdichten entstehen auch im mikroskopischen Bereich nicht, und ein Ladungstransfer zwischen Ionenleiter und Elektronenleiter wird weniger blockiert.

Eine Gefahr der Ablösung von Elektrodenteilchen durch Sauerstoffdruck ist somit nicht mehr gegeben.

Dadurch kann eine wesentliche Verlängerung der Benutzungszeit von Sauerstoffelektroden erzielt werden. Ohne Abänderung der Materielzusammensetzung ist eine Anwendung der Sauerstoffelektroden beschriebener Art auch bei Hochtemperatur-Brennstoffzellen oder Sauerstoff-Grenzstromsonden mit $ZrO_2$-Elektrolyt möglich.

Herstellungsbeispiel:

Als Festelektrolyt 10 dient mit $Y_2O_3$ stabilisiertes $ZrO_2$. Hierauf wird als Zwischenschicht ein Schlicker, der eine Pulvermischung aus dem Mischoxid $La_{1-x}Ca_xMn_{1+y}O_3$ und $Y_2O_3$-stabilisiertem $ZrO_2$ enthält, aufgespritzt. Mögliche Werte für die Zusammensetzung des Mischoxids sind x = 0,5, y = 0,03. Auf diese Zwischenschicht wird der eigentliche Elektrodenwerkstoff mit derselben Zusammensetzung wie das oben beschriebene Mischoxid als Schlicker aufgespritzt. Beide Schichten werden anschließend bei 1250° C eingebrannt.

**Patentansprüche**

1. Langzeitbeständige Sauerstoffelektrode für eine Elektrolysezelle oder für eine Hochtemperatur-Brennstoffzelle bestehend aus
   - einer ersten Schicht, einem Festelektrolyten (10) aus einem keramischen Ionenleiter wie stabilisiertem $ZrO_2$
   - einer zweiten Schicht, einem Verbundwerkstoff (14) aus keramischem Ionenleiter und einem keramischen Elektrodenwerkstoffs und
   - einer dritten Schicht, dem eigentlichen, keramischen Elektrodenwerkstoff (12) **dadurch gekennzeichnet**, daß
   - zur Verteilung der Sauerstoffentwicklung auf eine große Dreiphasengrenze innerhalb der zweiten Schicht (Verbundwerkstoff 14) eine große Anzahl von Poren (20) vorhanden ist, so daß eine Vielzahl von mikroskopischen Kontaktflächen zwischen den Partikeln (18) des Ionenleiters und denen des Elektrodenwerkstoffs (16) realisiert ist,
   - der keramische Ionenleiter der ersten und der zweiten Schicht aus durch MgO, CaO, $Y_2O_3$, $Yb_2O_3$ oder anderen Seltenerdoxiden stabilisiertem $ZrO_2$ besteht oder aus $CeO_2$ oder einer $CeO_2$-$ZrO_2$-Mischung
   - der keramische Elektrodenwerkstoff (12, 16) der zweiten und der dritten Schicht aus einem Mischoxid mit der Zusammensetzung $La_{1-x}Ca_xMn_{1+y}O_3$ oder $La_{1-x}Sr_xMn_{1+y}O_3$ mit $0,2 < x < 0,6$ und $0 < y < 0,1$ besteht.

**Claims**

1. Long-lasting oxygen electrode for an electrolysis cell or for a high temperature fuel cell comprising:
   - a first layer, a solid electrolyte (10) made from a ceramic ion conductor such as stabilised $ZrO_2$;
   - a second layer, a composite (14) of a ceramic ion conductor and a ceramic electrode material; and
   - a third layer, the actual ceramic electrode material (12), characterised in that:
   - in order to distribute the oxygen development over a high three-phase limit within the second layer (composite 14), a large number of pores (20) is present such that a plurality of microscopic contact surfaces is produced between the particles (18) of the ion conductor and those of the electrode material (16);
   - the ceramic ion conductor of the first and second layers consists of $ZrO_2$ stabilised by MgO, CaO, $Y_2O_3$, $Yb_2O_3$ or other rare earth oxides or of $CeO_2$ or a $CeO_2$-$ZrO_2$ mixture;
   - the ceramic electrode material (12, 16) of the second and third layers comprises a mixed oxide having the composition $La_{1-x}Ca_xMn_{1+y}O_3$ or $La_{1-x}Sr_xMn_{1+y}O_3$ where $0.2 < x < 0.6$ and $0 < y < 0.1$.

**Revendications**

1. Electrode à oxygène à longue durée de vie pour une cellule d'électrolyse ou pour une pile à combustible à haute température se composant
   - d'une première couche d'électrolyte solide (10) en un conducteur ionique céramique tel que du $ZrO_2$ stabilisé
   - d'une seconde couche en un matériau composite (14) comportant un conducteur ionique céramique et un matériau d'électrode céramique et
   - d'une troisième couche constituant le matériau d'électrode céramique proprement dit (12), **caractérisée en ce que**
   - en vue de la répartition du dégagement d'oxygène sur une grande surface limite triphasée à l'intérieur de la seconde couche (matériau composite 14), un grand nombre de pores (20) est prévu, de sorte qu'une pluralité de surfaces de contact microscopiques est réalisée entre les particules (18) du conducteur ionique et de celles du matériau d'électrode (16),
   - le conducteur ionique céramique de la première et de la deuxième couche est constitué par du $ZrO_2$ stabilisé par MgO, CaO, $Y_2O_3$, $Yb_2O_3$ ou d'autres oxydes dos terres rares ou par $CeO_2$ ou un mélange de $CeO_2$-$ZrO_2$
   - le matériau d'électrode céramique (12,16) de la seconde et de la troisième couche se compose d'un mélange d'oxydes de composition $La_{1-x}Ca_xMn_{1+y}O_3$ ou $La_{1-x}Sr_xMn_{1+y}O_3$
avec $0,2 < x < 0,6$ et $0 < y < 0,1$.

Fig. 1 : Aufbau einer Elektrolysezelle mit Festelektrolyt

Fig. 2 : Aufbau einer Elektrode entsprechend der Erfindung